# EUROPÄISCHE PATENTSCHRIFT

(11) **EP 3 689 686 B1**
(45) Veröffentlichungstag und Bekanntmachung des Hinweises auf die Patenterteilung: **11.01.2023**
(21) Anmeldenummer: 20153198.5
(22) Anmeldetag: 22.01.2020
(51) Int. Cl.: B60R 25/10, H05B 45/18, H05B 47/18, B60Q 11/00

(54) **KFZ-LEUCHTE UND SYSTEM**
MOTOR VEHICLE LIGHT AND SYSTEM
LAMPE POUR VÉHICULE À MOTEUR ET SYSTÈME DE COMMANDE

(30) Priorität: 30.01.2019 DE 202019100543 U
(43) Veröffentlichungstag der Anmeldung: 05.08.2020
(73) Patentinhaber: Marelli Automotive Lighting Reutlingen (Germany) GmbH, 72762 Reutlingen (DE)
(72) Erfinder: Blum, Dirk, 72076 Tübingen (DE); Jedek, Andreas, 72793 Pfullingen (DE)
(74) Vertreter: Kohler Schmid Möbus Patentanwälte

(56) Entgegenhaltungen:
- WO-A1-2015/039980
- WO-A1-2017/131571
- WO-A2-2014/072783
- DE-A1-102008 006 799
- DE-A1-102010 013 561
- DE-A1-102015 117 317
- US-A1- 2012 123 611

## Beschreibung

Die Erfindung betrifft eine Kfz-Leuchte mit einer Schaltungsanordnung, die einen Speicher aufweist, der einen Identifikationsspeicherbereich zur Speicherung wenigstens eines Identifikationswertes zur Identifikation der Kfz-Leuchte aufweist.

Eine solche Schaltungsanordnung kann zur Sicherung der Kfz-Leuchte gegen Diebstahl eingesetzt werden.

Moderne Kfz-Leuchten, beispielsweise LED-basierte Kfz-Scheinwerfer, unterliegen aufgrund ihres finanziellen Wertes einer permanenten Diebstahlsgefahr. Zum Schutz werden daher Schaltungsanordnungen zur Überwachung bzw. zur Prüfung des Vorhandenseins aller Kfz-Leuchten in einem PKW genutzt. Dazu lassen sich die Kfz-Leuchten zumeist mittels eines oder mehrerer Identifikationswerte identifizieren.

Ferner werden zum Betrieb derartiger Kfz-Leuchten unterschiedliche Betriebswerte, beispielsweise Temperaturwerte, sowie Merkmalswerte der jeweiligen Kfz-Leuchten, beispielsweise eine Binningklasse von in der Kfz-Leuchte verwendeten LEDs, benötigt.

Zur Überwachung und zum Betrieb einer oder mehrerer Kfz-Leuchten, beispielsweise eines Pkw, müssen diese Daten zusammengeführt und ausgewertet werden, wodurch sich eine hohe schaltungstechnische Komplexität der eingesetzten Schaltungsanordnungen und der diese verbindenden Bussysteme ergibt.

Aus der DE 10 2008 006 799 A1 ist ein Scheinwerfer für ein Fahrzeug mit einer Lichtquelle bekannt, wobei die Lichtquelle über eine Steuereineit steuerbar ist. In dem Scheinwerfer ist eine Speichereinheit angeordnet, in welcher scheinwerferspezifische Daten hinterlegt sind.

Eine Schaltungsanordnung mit einem Speicher, der eingerichtet ist, eine Korrelation zwischen einem Ereignis und einer Aktivität zu speichern, ist aus der DE 10 2017 101846 A1 bekannt.

Aufgabe der vorliegenden Erfindung ist es daher, eine Schaltungsanordnung für eine Kfz-Leuchte, eine Kfz-Leuchte mit einer solchen Schaltungsanordnung, eine Steuerschaltung, ein System sowie ein Verfahren anzubieten, durch die die schaltungstechnische Komplexität zur Überwachung und zum Betrieb wenigstens einer Kfz-Leuchte reduziert wird.

Gelöst wird die Aufgabe durch eine Kfz-Leuchte mit den Merkmalen des Patentanspruchs 1.

Somit ist es möglich, an ein und dasselbe Bussystem sowohl den wenigstens einen Identifikationswert als auch den Temperaturwert auszugeben. Dadurch kann auf getrennte Übertragungswege zur Übertragung des Temperaturwertes als auch zur Übertragung des wenigstens einen Identifikationswertes verzichtet werden. Kabelsteckverbindungen oder dergleichen, beispielsweise an der Kfz-Leuchte, können mit weniger Anschlusspins ausgeführt sein. Platz, beispielsweise für die Kabelsteckverbindungen, kann eingespart werden.

Die Schaltungsanordnung kann derart einfach gehalten sein, dass auf eine Software zur Steuerung der Schaltungsanordnung und/oder auf eine Mikrocontrollereinheit, insbesondere mit einer solchen Software, verzichtet werden kann.

Bevorzugt kann die Temperaturmessvorrichtung eine digitale Temperaturmessvorrichtung sein. Durch Digitalisierung des Temperaturwertes kann dieser mit einer geringeren Störanfälligkeit, insbesondere über das erste Bussystem, übertragen werden. Dazu kann die Temperaturmessvorrichtung einen Analog-Digital-Wandler aufweisen. Auch kann sie einen analogen Temperaturdateneingang und/oder einen, insbesondere analog arbeitenden, Temperaturfühler aufweisen.

Vorzugsweise kann der Speicher einen Merkmalsspeicherbereich zur Speicherung wenigstens eines Merkmalswerts der Kfz-Leuchte und/oder der Schaltungsanordnung aufweisen. Ein solcher Merkmalswert kann insbesondere ein die Kfz-Leuchte charakterisierender Wert wie beispielsweise eine Binningklasse oder eine Bezeichnung einer bereitgestellten Lichtfunktion sein. Der Merkmalswert kann auch eine Busadresse sein, unter der die Schaltungsanordnung und/oder die Kfz-Leuchte beispielsweise bei anderen Teilnehmern des ersten Bussystems bekannt sind.

Eine weitere Vereinfachung ergibt sich, wenn lediglich eine unidirektionale Datenkommunikation, insbesondere ein Datenversand, vorgesehen ist. Dazu kann die Datenschnittstelle als reine Datenausgabeschnittstelle ausgebildet sein.

Auch kann die Datenschnittstelle zur Anbindung an ein Ein-Draht-Bussystem, insbesondere an einen LIN-Bus, eingerichtet sein. Die Datenschnittstelle kann zur Kommunikation auf einem Physical Layer des ersten Bussystems, insbesondere auf dem Physical Layer des LIN-Busses, eingerichtet sein. Die über die Datenschnittstelle ausgegebenen Daten können ein Paritätsbit und/oder eine Prüfsumme aufweisen.

Eine noch weitere Vereinfachung lässt sich erzielen, wenn die Schaltungsanordnung eingerichtet ist, den Identifikationswert und den Temperaturwert selbsttätig, insbesondere zeitgesteuert, über die Datenschnittstelle an das erste Bussystem auszugeben.

Insbesondere kann als Steuersignal, mit dem beispielsweise ein oder mehrere Datenausgaben ausgelöst werden, das Erreichen eines vorgegebenen Pegels der Versorgungsspannung und/oder das Auftreten einer bestimmten Signalform im zeitlichen Verlauf der Versorgungsspannung, beispielsweise eine aufsteigende oder fallende Flanke, vorgesehen sein.

Anstelle einer Auswertung des Pegels der Versorgungsspannung kann die Schaltungsanordnung eingerichtet sein, bei Vorliegen einer betriebsnotwendigen Versorgungsspannung mit der Datenausgabe zu beginnen oder diese fortzusetzen.

Die Schaltungsanordnung kann eingerichtet sein, Daten zu wenigstens einem vordefinierten Zeitpunkt nach Erhalt des Steuersignals und/oder nach Einschalten der Schaltungsanordnung auszugeben. Der vordefinierte Zeitpunkt kann aus einem im Merkmalsspeicherbereich gespeicherten Merkmalswert, insbesondere der Busadresse, abgeleitet sein. Dann kann bei Kenntnis des Einschaltzeitpunkts ein anderer Teilnehmer aus dem Zeitpunkt des Empfangs der Daten auf die sendende Schaltungsanordnung schließen. Somit lassen sich Daten mehrerer Schaltungsanordnungen über dasselbe Bussystem konfliktfrei abfragen und/oder der jeweiligen Schaltungsanordnung zuordnen, ohne dass zur jeweiligen Schaltungsanordnung eine Aufforderung zur Datenausgabe versandt werden muss. Somit kann auf ein bidirektionales Bussystem zugunsten eines einfacheren und kostengünstigeren, unidirektionalen Bussystems verzichtet werden.

Der Speicher kann als einmalprogrammierbarer Speicher ausgebildet sein und/oder einen solchen aufweisen. Ein solcher Speicher lässt sich einmalig beschreiben und beliebig oft lesen. Somit können in einem solchen Speicher, beispielsweise im Rahmen der Fertigung der Schaltungsanordnung, Daten abgelegt werden, die später nicht mehr verändert werden können. Insbesondere kann der Identifikationsspeicherbereich mit einem oder mehreren Identifikationswerten beschrieben werden. Beispielsweise können als Identifikationswerte ein Produktionsdatum und eine laufende Nummer vorgesehen sein. Später können dann die Schaltungsanordnung bzw. eine ihr zugeordnete Kfz-Leuchte anhand der im Identifikationsspeicherbereich abgelegten Identifikationswerte identifiziert werden.

Die Schaltungsanordnung ist als integrierter Schaltkreis ausgebildet.

Die Schaltungsanordnung kann auf einem LED-Träger der Kfz-Leuchte angeordnet sein. Alternativ oder ergänzend kann die Schaltungsanordnung als Teil einer sonstigen Elektronik der Kfz-Leuchte ausgebildet sein. Somit kann die Schaltungsanordnung in die Kfz-Leuchte integriert sein. Dadurch kann unter anderem der Speicher mit seinem Identifikationsspeicherbereich untrennbar der Kfz-Leuchte zugeordnet sein. Die Diebstahlschutzfunktion lässt sich dadurch einfach realisieren.

Eine Steuerschaltung zur Steuerung der Schaltungsanordnung einer erfindungsgemäßen Kfz-Leuchte kann eingerichtet sein, eine Versorgungsspannung der Schaltungsanordnung zu steuern.

Eine oder mehrere solcher Kfz-Leuchten lassen sich an einem, insbesondere gemeinsamen, ersten Bussystem betreiben, sodass sich auch hierdurch die schaltungstechnische Komplexität reduzieren lässt.

Dadurch, dass die Steuerschaltung eingerichtet ist, die Versorgungsspannung der Schaltungsanordnung zu steuern, kann auf dezidierte Steuerdatenausgänge auf Seiten der Steuerschaltung und zugehörige Steuerleitungen verzichtet werden.

Die Steuerschaltung kann die von der Schaltungsanordnung ausgegebenen Daten empfangen, wenn sie an das erste Bussystem angeschlossen ist. Vorteilhaft ist es daher, wenn die Steuerschaltung zur Anbindung an das erste Bussystem eingerichtet ist.

Denkbar ist, dass die Steuerschaltung zur Anbindung an ein zweites Bussystem eingerichtet ist. Dazu kann sie eine zweite Datenschnittstelle, die insbesondere auf das zweite Bussystem abgestimmt sein kann, aufweisen. Das zweite Bussystem kann beispielsweise ein CAN-Bus oder ein LIN-Bus sein. Dann kann die Steuerschaltung als Gateway zwischen dem ersten Bussystem und dem zweiten Bussystem ausgebildet sein.

Das zweite Bussystem kann mit wenigstens einer weiteren Funktionseinheit, insbesondere eines Kfz, in das die Kfz-Leuchte eingebaut ist, verbindbar und/oder verbunden sein. Die weitere Funktionseinheit kann beispielsweise eine Überwachungseinheit und/oder eine Leuchtenansteuerungseinheit sein und/oder eine solche Einheit aufweisen.

Die Funktionseinheit kann ausgebildet sein, von der Schaltungsanordnung und/oder von der Steuerschaltung ausgesandte Daten zu empfangen und/oder auszuwerten.

Die Funktionseinheit kann ein Schließsystem, insbesondere einer Kfz-Tür, aufweisen und/oder mit einem solchen verbunden sein. Die Funktionseinheit, insbesondere wenn sie als Überwachungseinheit ausgebildet ist, kann ferner ausgebildet sein, einen Prüfcode aus den empfangenen Daten einer oder mehrerer Schaltungsanordnungen, insbesondere einer oder mehrerer Kfz-Leuchten, beispielsweise aus empfangenen Identifikationswerten, zu generieren.

Weicht der Prüfcode von einem Vorgabewert und/oder einem früher berechneten Prüfcode ab, kann die Funktionseinheit dies als Indiz für eine Änderung, beispielsweise durch Diebstahl einer Kfz-Leuchte oder durch Einbau einer gestohlenen Kfz-Leuchte, werten.

Ferner kann die Funktionseinheit eingerichtet sein, insbesondere im Falle einer solchen Abweichung des Prüfcodes, ein Alarmsignal auszulösen und/oder das Öffnen und/oder Schließen einer oder mehrerer Türen des Kfz zu beschränken oder zu sperren.

Die Funktionseinheit, insbesondere wenn sie als Leuchtenansteuerungseinheit ausgebildet ist oder eine solche aufweist, kann ferner eingerichtet sein, ein oder mehrere Temperaturwerte und/oder ein oder mehrere Merkmalswerte, beispielsweise die Binningklasse, insbesondere ein oder mehrerer Schaltungsanordnungen, auszuwerten und/oder darauf aufbauend ein oder mehrere Kfz-Leuchten zu steuern.

Des Weiteren betrifft die Erfindung ein System mit den Merkmalen des Anspruchs 8. Bevorzugt kann ein solches System mehr als eine Schaltungsanordnung und/oder mehr als eine Steuerschaltung aufweisen. Vorzugsweise können auch mehrere der Schaltungsanordnungen und/oder mehrere der Steuerschaltungen an das erste Bussystem angebunden sein. Bei einem solchen System kann die schaltungstechnische Komplexität beispielsweise dadurch reduziert sein, dass das erste Bussystem durch mehrere Komponenten des Systems genutzt wird.

Wenigstens eine der Schaltungsanordnungen kann auf einem LED-Träger, insbesondere einer der Kfz-Leuchten, angeordnet sein.

Das System kann ein zweites Bussystem und/oder eine Funktionseinheit, die insbesondere eingerichtet ist, von der Schaltungsanordnung und/oder der Steuerschaltung ausgesandte Daten zu empfangen und/oder auszuwerten, aufweisen. Insbesondere kann die Funktionseinheit wie vorangehend beschrieben ausgebildet sein.

Die Schaltungsanordnung der Kfz-Leuchte, kann einen Identifikationswert zur Identifikation der Kfz-Leuchte und einen Temperaturwert i der Kfz-Leuchte, über eine Datenschnittstelle der Schaltungsanordnung zur Anbindung an ein erstes Bussystem an das erste Bussystem, vorzugsweise selbsttätig, ausgeben.

Wie bereits vorangehend geschildert, kann die schaltungstechnische Komplexität zur Überwachung und zum Betrieb wenigstens einer Kfz-Leuchte reduziert werden. Insbesondere werden über ein und dasselbe Bussystem mehrere Daten übertragen. Somit lässt sich die Anzahl der zur Datenübertragung benötigten Bussysteme reduzieren.

Eine weitere Reduktion der Komplexität lässt sich - wie sich ebenfalls bereits aus dem Vorangehenden ergibt - dadurch erreichen, dass Daten, insbesondere der Identifikationswert und/oder der Temperaturwert, selbsttätig an das erste Bussystem ausgegeben werden.

Die Ausgabe an das erste Bussystem kann vorzugsweise zeitgesteuert erfolgen.

Als Steuersignal, mit dem beispielsweise ein oder mehrere Datenausgaben ausgelöst werden, können das Erreichen eines vorgegebenen Pegels einer Versorgungsspannung, insbesondere der Schaltungsanordnung, und/oder das Auftreten einer bestimmten Signalform im zeitlichen Verlauf der Versorgungsspannung, beispielsweise eine aufsteigende oder fallende Flanke, verwendet werden.

Auch kann vorgesehen sein, bei Vorliegen einer betriebsnotwendigen Versorgungsspannung mit der Datenausgabe zu beginnen oder diese fortzusetzen.

Bei einer Variante ist vorgesehen, dass Daten zu wenigstens einem vordefinierten Zeitpunkt nach Erhalt des Steuersignals und/oder nach Einschalten der Schaltungsanordnung ausgegeben werden. Der vordefinierte Zeitpunkt kann aus einem im Merkmalsspeicherbereich gespeicherten Merkmalswert, insbesondere einer Busadresse, abgeleitet sein.

Auch kann vorgesehen sein, dass, insbesondere bei Kenntnis des Einschaltzeitpunkts, ein anderer Teilnehmer des ersten Bussystems aus dem Zeitpunkt des Empfangs der Daten auf die sendende Schaltungsanordnung schließt. Somit lassen sich Daten mehrerer Schaltungsanordnungen über dasselbe Bussystem konfliktfrei abfragen und/oder der jeweiligen Schaltungsanordnung zuordnen, ohne dass zur jeweiligen Schaltungsanordnung eine Aufforderung zur Datenausgabe versandt werden muss. Somit kann auf ein bidirektionales Bussystem zugunsten eines einfacheren und kostengünstigeren, unidirektionalen Bussystems verzichtet werden.

Weitere Merkmale und Vorteile der Erfindung ergeben sich aus der nachfolgenden detaillierten Beschreibung der Ausführungsbeispiele der Erfindung, anhand der Figuren der Zeichnung, die erfindungswesentliche Einzelheiten zeigt, sowie aus den Ansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Es zeigen:
- Fig. 1: eine Schaltungsanordnung für eine Kfz-Leuchte und
- Fig. 2: ein System.

Im Folgenden werden zur Erleichterung des Verständnisses der Erfindung für funktional sich entsprechende Elemente jeweils gleiche Bezugszeichen verwendet.

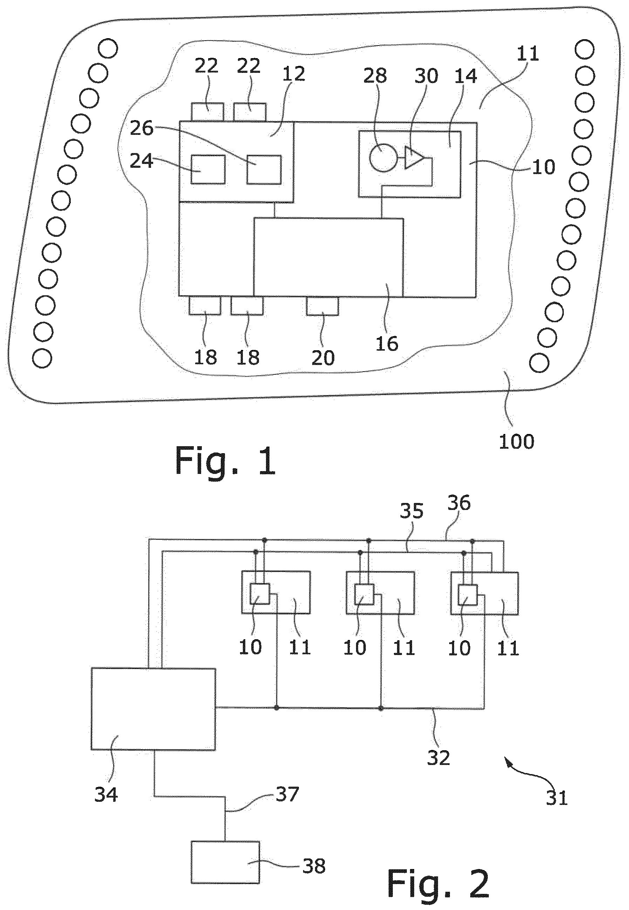

**Fig. 1** zeigt eine Schaltungsanordnung **10.** Die Schaltungsanordnung 10 ist als integrierter Schaltkreis ausgebildet. Sie ist auf einem LED-Träger **11** einer der Schaltungsanordnung 10 zugeordneten Kfz-Leuchte **100** angeordnet. Die Kfz-Leuchte 100 ist als LED-Scheinwerfer, beispielsweise mit einer Abblendlicht- und/oder einer Fernlichtfunktion, ausgebildet.

Die Schaltungsanordnung 10 weist einen Speicher **12,** eine Temperaturmessvorrichtung **14** und eine Datenschnittstelle **16** auf.

Der Speicher 12 und die Temperaturmessvorrichtung 14 sind jeweils mit der Datenschnittstelle 16 datentechnisch verbunden.

Die Schaltungsanordnung 10 weist ferner zwei Versorgungsspannungspins **18** zur Spannungsversorgung der Schaltungsanordnung 10, ein Datenausgangspin **20,** sowie zwei Programmierpins **22** auf. Einer der beiden Versorgungsspannungspins 18 ist als Anschluss einer positiven Versorgungsspannung ausgebildet; das andere ist als Masseanschluss ausgebildet.

In diesem Ausführungsbeispiel kann auf einen Mikrocontroller und/oder eine Steuersoftware zur Steuerung der Schaltungsanordnung 10 verzichtet werden.

Der Speicher 12 weist mehrere Speicherbereiche, insbesondere einen Identifikationsspeicherbereich **24** sowie einen Merkmalsspeicherbereich **26,** auf. Der Speicher 12 ist als einmalprogrammierbarer Speicher ausgebildet. Über die beiden Programmierpins 22 lassen sich die Speicherbereiche, insbesondere im Rahmen der Fertigung und/oder der Inbetriebnahme der Schaltungsanordnung 10, einmalig mit Werten belegen.

Als Identifikationswerte sind im Identifikationsspeicherbereich 24 jeweils das Produktionsdatum der Schaltungsanordnung und/oder der zugeordneten Kfz-Leuchte 100 sowie eine, insbesondere eindeutige, fortlaufende Nummer gespeichert. Aus dem Produktionsdatum sowie der fortlaufenden Nummer ist somit ein eindeutiger Identifikationscode generierbar.

Im Merkmalsspeicherbereich sind die Binningklasse der in der Kfz-Leuchte 100 verwendeten LEDs, die Lichtfunktion der Kfz-Leuchte 100, beispielsweise ob die KFZ-Leuchte als Fern- und/oder Abblendlicht ausgebildet ist, sowie eine, insbesondere fest vorgegebene, Busadresse gespeichert.

Die Temperaturmessvorrichtung 14 weist einen analog arbeitenden Temperaturfühler **28** und einen hieran angeschlossenen Analog-Digital-Wandler **30** auf. Im Betrieb liefert der Temperaturfühler 28 einen Wert einer aktuellen Temperatur in analoger Form, der vom Analog-Digital-Wandler 30 laufend in einen digitalen Wert umgesetzt und der Datenschnittstelle 16 zur Verfügung gestellt wird.

Die Datenschnittstelle 16 ist eingerichtet, über den Datenausgangspin 20 Daten an ein Ein-Draht-Bussystem, in diesem Ausführungsbeispiel nach Maßgabe des Physical Layer eines LIN-Bussystems, auszugeben. Die Datenschnittstelle 16 ist dazu als reine Datenausgabeschnittstelle ausgebildet. Alternativ könnte die Datenschnittstelle 16 auch als (vollwertige) LIN-Slave-Datenschnittstelle ausgebildet sein.

In diesem Ausführungsbeispiel ist die Schaltungsanordnung 10 eingerichtet, über ihre Datenschnittstelle 16 zeitgesteuert die im Speicher 12 abgelegten Identifikations- und Merkmalswerte sowie den jeweils aktuellen, durch die Temperaturmessvorrichtung 14 ermittelten Temperaturwert auszugeben. Denkbar ist, die Busadresse nicht mit auszugeben, so dass beispielsweise die Bandbreite der Datenübertragung reduziert werden kann.

Bei der Kodierung der Daten werden ein Paritätsbit sowie eine Prüfsumme berechnet und in die jeweiligen, auszugebenden Datenpakete integriert.

Ferner ist die Datenschnittstelle 16 eingerichtet, diese Datenpakete wenigstens zu einem aus der eingespeicherten Busadresse abgeleiteten Zeitpunkt, insbesondere ausgehend von einem Einschaltzeitpunkt der Schaltungsanordnung 10, selbsttätig zu versenden. Weist beispielsweise die Schaltungsanordnung 10 die Busadresse "1" auf, so werden nach 10 ms, beginnend mit dem Zeitpunkt, ab dem eine vordefinierte Versorgungsspannung an den Versorgungsspannungspins 18 anliegt, die genannten Werte auf den Datenausgangspin 20 ausgegeben. Weist die Busadresse den Wert "2" auf, werden entsprechend nach 20 ms Daten ausgegeben usw.

**Fig.** 2 zeigt ein System **31,** das unter anderem mehrere, insbesondere drei, Schaltungsanordnungen 10, eine Steuerschaltung 34 und ein erstes Bussystem **32** aufweist, wobei die Schaltungsanordnungen 10 und die Steuerschaltung 34 an das erste Bussystem 32 angebunden sind.

Zu erkennen sind insbesondere drei LED-Träger 11. Auf jedem der LED-Träger 11 ist eine der Schaltungsanordnungen 10 angeordnet. Die LED-Träger 11 sind jeweils in unterschiedlichen Kfz-Leuchten 100 (in Fig. 2 nicht dargestellt) eines Kraftfahrzeugs eingebaut. Die Kfz-Leuchten 100 sind somit jeweils einem LED-Träger 11 und damit jeweils einer Schaltungsanordnung 10 zugeordnet.

Die Steuerschaltung 34 ist über eine Versorgungsspannungsleitung **35** und eine Masseleitung **36** mit den Schaltungsanordnungen 10 über die Versorgungsspannungspins 18 (Fig. 1) verbunden, um die Schaltungsanordnungen 10 mit Versorgungsspannung zu versorgen. Die Steuerschaltung 34 ist dazu eingerichtet, zumindest die an der Versorgungsspannungsleitung 35 anliegende (positive) Versorgungsspannung zu schalten und damit die Versorgungsspannung der Schaltungsanordnungen 10 zu steuern.

Die Schaltungsanordnungen 10 entsprechen in ihrem Aufbau im Wesentlichen der vorangehend beschriebenen Schaltungsanordnung 10. Sie unterscheiden sich voneinander insbesondere dadurch, dass in ihren jeweiligen Identifikationsspeicherbereichen 24 und ihren Merkmalsspeicherbereichen 26 (Fig. 1) die die den Schaltungsanordnungen 10 zugeordneten Kfz-Leuchten 100 betreffenden Werte gespeichert sind. Dabei sind als Busadressen in diesem Ausführungsbeispiel die Werte "1" für die linke, "2" für die mittlere und "3" für die rechte Schaltungsanordnung 10 gemäß Fig. 2 eingespeichert.

Dazu werden die Speicher 12 (Fig. 1) der Schaltungsanordnungen 10 am Ende ihrer Produktion, beispielsweise während eines End-of-Line-Tests, mittels der Programmierpins 22 (Fig. 1) beschrieben. Da es sich um einmalprogrammierbare Speicher handelt, können die beschriebenen Daten ab diesem Zeitpunkt nicht mehr verändert werden; insbesondere können die Daten nicht mehr manuell manipuliert werden.

Das Bussystem 32 ist gemäß dem Physical Layer eines LIN-Bussystems ausgebildet.

Somit können Daten der Speicher 12 sowie die Temperaturwerte der Temperaturmessvorrichtung 14 über ein und dasselbe Bussystem 32 an die Steuerschaltung 34 übertragen werden. Im Vergleich zu einer separaten Übertragung dieser Daten mittels separater Drahtverbindungen können die Anzahl benötigter Drähte bzw. Kabel und somit die schaltungstechnische Komplexität der gesamten Anordnung reduziert werden.

Die Steuerschaltung 34 ist ferner als Gateway zwischen dem Bussystem 32 und einem an die Steuerschaltung 34 angeschlossenen, zweiten Bussystem **37** ausgebildet.

Am zweiten Bussystem 37, das beispielsweise als LIN-Bus, insbesondere entsprechend dem Physical Layer eines LIN-Bussystems, oder als CAN-Bussystem ausgebildet sein kann, ist ferner eine Funktionseinheit **38** angeschlossen. Die Funktionseinheit 38 weist eine Überwachungseinheit zur Überwachung des Vorhandenseins aller Kfz-Leuchten 100 des Kraftfahrzeugs sowie eine Leuchtenansteuerungseinheit zur Ansteuerung dieser Kfz-Leuchten 100 auf.

Wie folgt lassen sich die Daten jeder einzelnen Schaltungsanordnung 10 abfragen und auswerten:
Nach Einschalten der Versorgungsspannung der Schaltungsanordnungen 10 durch die Steuerschaltung 34 beginnt jede der Schaltungsanordnungen 10 selbsttätig die jeweiligen Daten aus ihrem Speicher 12 sowie ihren jeweiligen Temperaturwert auszugeben. Nachdem sich aus den jeweiligen Busadressen der jeweilige Ausgabezeitraum ergibt, können Datenkonflikte vermieden und die Daten sequenziell, d. h. von einer Schaltungsanordnung 10 nach der anderen, auf das Bussystem 32 ausgegeben werden.

Die Steuerschaltung 34 empfängt diese Daten und leitet sie über das zweite Bussystem 37 an die Funktionseinheit 38 weiter.

Sobald die Daten aller Schaltungsanordnungen 10 empfangen sind, schaltet die Steuerschaltung 34 die Versorgungsspannung wieder ab.

Die Steuerschaltung 34 kann ausgebildet sein, diesen Vorgang zu wiederholen, beispielsweise im Falle eines Datenübertragungsfehlers und/oder nach Ablauf eines vordefinierten Aktualisierungsintervalls, um erneut die Daten aller Schaltungsanordnungen 10 abzufragen und auszuwerten. Ein Datenübertragungsfehler lässt sich dazu durch Auswertung der Prüfsumme und/oder des Paritätsbits erkennen.

Zur Überwachung der verbauten Kfz-Leuchten 100, insbesondere zu deren Diebstahlsicherung, wird aus dem jeweiligen Produktionsdatum sowie der jeweiligen fortlaufenden Nummer einer jeden Schaltungsanordnung 10 ein Prüfcode durch die Funktionseinheit 38 berechnet. Dieser Prüfcode wird von der Funktionseinheit 38 mit einem vordefinierten Prüfcode verglichen. Für den Fall einer Abweichung ist die Funktionseinheit 38 eingerichtet, einen Alarm auszulösen.

Die Funktionseinheit 38 ist ferner eingerichtet, in Abhängigkeit der ausgelesenen Temperaturwerte und der Binningwerte die jeweiligen Kfz-Leuchten 100 bzw. die darin enthaltenen LED anzusteuern.

Bei einer alternativen Ausführungsform der Erfindung ist vorgesehen, dass ein oder mehrere der Steuereinheiten 34 in die Funktionseinheit 38 integriert sind, so dass auf das zweite Bussystem 37 verzichtet werden kann. Alternativ oder ergänzend kann auch vorgesehen sein, dass die Funktionseinheit 38 die Steuereinheit 34 steuert. Insbesondere kann vorgesehen sein, dass die Funktionseinheit 38 steuert, ob bzw. wann die Schaltungsanordnungen 10 Daten ausgeben.

Ferner kann die Funktionseinheit 38 alternativ oder ergänzend zur Steuereinheit 34 mit dem ersten Bussystem verbunden und/oder verbindbar sein.

### Bezugszeichenliste

- 10: Schaltungsanordnung
- 11: LED-Träger
- 12: Speicher
- 14: Temperaturmessvorrichtung
- 16: Datenschnittstelle
- 18: Versorgungsspannungspin
- 20: Datenausgangspin
- 22: Programmierpin
- 24: Identifikationsspeicherbereich
- 26: Merkmalsspeicherbereich
- 28: Temperaturfühler
- 30: Wandler
- 31: System
- 32: erstes Bussystem
- 34: Steuerschaltung
- 35: Versorgungsspannungsleitung
- 36: Masseleitung
- 37: zweites Bussystem
- 38: Funktionseinheit
- 100: Kfz-Leuchte

## Patentansprüche

1. Kfz-Leuchte (100) mit einer Schaltungsanordnung (10), wobei die Schaltungsanordnung (10)
- einen Speicher (12), der einen Identifikationsspeicherbereich (24) zur Speicherung wenigstens eines Identifikationswertes zur Identifikation der Kfz-Leuchte (100) aufweist,
- eine Temperaturmessvorrichtung (14) zur Messung eines Temperaturwertes der Kfz-Leuchte (100), und
- eine Datenschnittstelle (16) zur Anbindung an ein erstes Bussystem (32) aufweist,
wobei die Schaltungsanordnung (10) eingerichtet ist, den Identifikationswert über die Datenschnittstelle (16) an das erste Bussystem (32) auszugeben, **dadurch gekennzeichnet, dass** die Schaltungsanordnung (10) als integrierter Schaltkreis ausgebildet ist und weiter eingerichtet ist, zusätzlich den Temperaturwert über die Datenschnittstelle (16) an das erste Bussystem (32) auszugeben.

2. Kfz-Leuchte nach Anspruch 1, **dadurch gekennzeichnet, dass** der Speicher (12) einen Merkmalsspeicherbereich (26) zur Speicherung wenigstens eines Merkmalswerts der Kfz-Leuchte (100) und/oder der Schaltungsanordnung (10) aufweist.

3. Kfz-Leuchte nach einem der vorhergehenden Ansprüche, **dadurch gekennzeichnet, dass** die Datenschnittstelle (16) als reine Datenausgabeschnittstelle ausgebildet ist.

4. Kfz-Leuchte nach einem der vorhergehenden Ansprüche, **dadurch gekennzeichnet, dass** die Datenschnittstelle (16) zur Anbindung an ein Ein-Draht-Bussystem, insbesondere an einen LIN-Bus, eingerichtet ist.

5. Kfz-Leuchte nach einem der vorhergehenden Ansprüche, **dadurch gekennzeichnet, dass** die Schaltungsanordnung (10) eingerichtet ist, den Identifikationswert und den Temperaturwert selbsttätig, insbesondere zeitgesteuert, über die Datenschnittstelle (16) an das erste Bussystem (32) auszugeben.

6. Kfz-Leuchte nach einem der vorhergehenden Ansprüche, **dadurch gekennzeichnet, dass** der Speicher (12) als einmalprogrammierbarer Speicher ausgebildet ist und/oder einen solchen aufweist.

7. Kfz-Leuchte nach einem der vorhergehenden Ansprüche, **dadurch gekennzeichnet, dass** die Kfz-Leuchte (100) weiter einen LED-Träger (11) aufweist und die Schaltungsanordnung (10) auf dem LED-Träger (11) der Kfz-Leuchte (100) angeordnet ist.

8. System (31), das eine Kfz-Leuchte (100) nach einem der Ansprüche 1 bis 7, eine Steuerschaltung (34) und ein erstes Bussystem (32) aufweist, wobei die Schaltungsanordnung (10) der Kfz-Leuchte (100) und die Steuerschaltung (34) an das erste Bussystem (32) angebunden sind und die Steuerschaltung (34) eingerichtet ist, eine Versorgungsspannung der Schaltungsanordnung (10) zu steuern.

9. System nach dem vorhergehenden Anspruch, **dadurch gekennzeichnet, dass** das System (31) ein zweites Bussystem (37) und/oder eine Funktionseinheit (38), die insbesondere eingerichtet ist, von der Schaltungsanordnung (10) und/oder der Steuerschaltung (34) ausgesandte Daten zu empfangen und/oder auszuwerten, aufweist.

10. System nach einem der vorhergehenden Ansprüche 8 oder 9, **dadurch gekennzeichnet, dass** die Steuerschaltung (34) zur Anbindung an das zweite Bussystem (37) eingerichtet ist.

## Claims

1. Motor vehicle light (100) comprising a circuit arrangement (10), the circuit arrangement (10) having
- a memory (12) which has an identification memory region (24) for storing at least one identification value for identifying the motor vehicle light (100),
- a temperature measurement device (14) for measuring a temperature value of the motor vehicle light (100), and
- a data interface (16) for connection to a first bus system (32),
the circuit arrangement (10) being configured to output the identification value to the first bus system (32) via the data interface (16), **characterized in that** the circuit arrangement (10) is designed as an integrated circuit and is further configured to additionally output the temperature value to the first bus system (32) via the data interface (16).

2. Motor vehicle light according to claim 1, **characterized in that** the memory (12) has a feature memory region (26) for storing at least one feature value of the motor vehicle light (100) and/or the circuit arrangement (10).

3. Motor vehicle light according to either of the preceding claims, **characterized in that** the data interface (16) is designed purely as a data output interface.

4. Motor vehicle light according to any of the preceding claims, **characterized in that** the data interface (16) is configured for connection to a single wire bus system, in particular to an LIN Bus.

5. Motor vehicle light according to any of the preceding claims, **characterized in that** the circuit arrangement (10) is configured to output the identification value and the temperature value automatically, in particular in a time-controlled manner, to the first bus system (32) via the data interface (16).

6. Motor vehicle light according to any of the preceding claims, **characterized in that the** memory (12) is designed as a memory that can be programmed once and/or comprises a memory of this kind.

7. Motor vehicle light according to any of the preceding claims, **characterized in that** the motor vehicle light (100) further comprises an LED carrier (11) and the circuit arrangement (10) is arranged on the LED carrier (11) of the motor vehicle light (100).

8. System (31) comprising a motor vehicle light (100) according to any of claims 1 to 7, a control circuit (34) and a first bus system (32), wherein the circuit arrangement (10) of the motor vehicle light (100) and the control circuit (34) are connected to the first bus system (32), and the control circuit (34) is configured to control a supply voltage of the circuit arrangement (10).

9. System according to the preceding claim, **characterized in that** the system (31) comprises a second bus system (37) and/or a functional unit (38) which is in particular configured to receive and/or evaluate data emitted by the circuit arrangement (10) and/or the control circuit (34).

10. System according to either of the preceding claims 8 or 9, **characterized in that the** control circuit (34) is configured for connection to the second bus system (37).

## Revendications

1. Lampe pour véhicule automobile (100) comportant un agencement de circuit (10), l'agencement de circuit (10) présentant
- une mémoire (12) qui présente une zone de mémorisation d'identification (24) permettant de mémoriser au moins une valeur d'identification pour l'identification de la lampe pour véhicule automobile (100),
- un dispositif de mesure de température (14) permettant de mesurer une valeur de température de la lampe pour véhicule automobile (100), et
- une interface de données (16) permettant la connexion à un premier système de bus (32),
dans laquelle l'agencement de circuit (10) est configuré pour transmettre la valeur d'identification au premier système de bus (32) par l'intermédiaire de l'interface de données (16), **caractérisée en ce que** l'agencement de circuit (10) est réalisé en tant que circuit intégré et est en outre configuré pour transmettre également la valeur de température au premier système de bus (32) par l'intermédiaire de l'interface de données (16).

2. Lampe pour véhicule automobile selon la revendication 1, **caractérisée en ce que** la mémoire (12) présente une zone de mémorisation de caractéristiques (26) permettant de mémoriser au moins une valeur caractéristique de la lampe pour véhicule automobile (100) et/ou de l'agencement de circuit (10).

3. Lampe pour véhicule automobile selon l'une des revendications précédentes, **caractérisée en ce que** l'interface de données (16) est réalisée en tant qu'interface de sortie de données uniquement.

4. Lampe pour véhicule automobile selon l'une des revendications précédentes, **caractérisée en ce que** l'interface de données (16) est configurée pour la connexion à un système de bus monofilaire, en particulier à un bus LIN.

5. Lampe pour véhicule automobile selon l'une des revendications précédentes, **caractérisée en ce que** l'agencement de circuit (10) est configuré pour transmettre automatiquement, en particulier de manière commandée dans le temps, la valeur d'identification et la valeur de température au premier système de bus (32) par l'intermédiaire de l'interface de données (16).

6. Lampe pour véhicule automobile selon l'une des revendications précédentes, **caractérisée en ce que** la mémoire (12) est réalisée en tant que et/ou présente une mémoire programmable une seule fois.

7. Lampe pour véhicule automobile selon l'une des revendications précédentes, **caractérisée en ce que** la lampe pour véhicule automobile (100) présente en outre un support de DEL (11) et l'agencement de circuit (10) est disposé sur le support de DEL (11) de la lampe pour véhicule automobile (100).

8. Système (31) présentant une lampe pour véhicule automobile (100) selon l'une des revendications 1 à 7, un circuit de commande (34) et un premier système de bus (32), l'agencement de circuit (10) de la lampe pour véhicule automobile (100) et le circuit de commande (34) étant connectés au premier système de bus (32) et le circuit de commande (34) étant configuré pour commander une tension d'alimentation de l'agencement de circuit (10).

9. Système selon la revendication précédente, **caractérisé en ce que** le système (31) présente un second système de bus (37) et/ou une unité fonctionnelle (38) qui est en particulier configurée pour recevoir et/ou évaluer des données envoyées par l'agencement de circuit (10) et/ou le circuit de commande (34).

10. Système selon l'une des revendications précédentes 8 ou 9, **caractérisé en ce que** le circuit de commande (34) est configuré pour la connexion au second système de bus (37).
